# EUROPÄISCHE PATENTSCHRIFT

(11) **EP 2 312 289 B1**
(45) Veröffentlichungstag und Bekanntmachung des Hinweises auf die Patenterteilung: **04.05.2016**
(21) Anmeldenummer: 10186762.0
(22) Anmeldetag: 06.10.2010
(51) Int. Cl.: G01K 17/06, F24D 19/10

(54) **Heizkostenverteiler**
Heating cost distributor
Répartiteur de coûts de chauffage

(30) Priorität: 17.10.2009 DE 102009049749
(43) Veröffentlichungstag der Anmeldung: 20.04.2011
(73) Patentinhaber: QUNDIS GmbH, 99098 Erfurt (DE)
(72) Erfinder: Dobeneck, Wolfgang, 99996, Menteroda OT Urbach (DE)
(74) Vertreter: Liedtke, Markus

(56) Entgegenhaltungen:
- DE-B3-102004 023 990
- US-A- 4 150 371

## Beschreibung

Die Erfindung betrifft einen Heizkostenverteiler nach den Merkmalen des Oberbegriffs des Anspruchs 1.

Bei einem elektronischen Heizkostenverteiler, der nach seiner Montage mittels einer mechanisch wirkenden Plombe auf einem Heizkörper gesichert ist, wird oftmals eine zusätzliche Sicherung gefordert, die ein Lösen oder Entfernen des Heizkostenverteilers vom Heizkörper detektiert. Dazu wird beim Montagevorgang ein Kontakt geöffnet oder geschlossen, der von einem Prozessor des Heizkostenverteilers bewertet wird. Diese Information kann bei vernetzten Heizkostenverteilern sofort auch einem Betreiber dieser Heizkostenverteiler mitgeteilt werden. Dieser Kontakt wird beispielsweise als Manipulations- oder Sabotagekontakt bezeichnet.

Aus dem Stand der Technik sind als derartige Manipulationskontakte vorwiegend SMD-Taster (Surface Mounted Device) oder Schalter bekannt, welche bei einer Bestückung einer Leiterplatte des Heizkostenverteilers auf diese aufgebracht werden. Ein Schaltvorgang wird über Merkmale an einem Gehäuse des Heizkostenverteilers oder durch zusätzliche Bauteile bei einem Aufsetzen des Heizkostenverteilers auf einen Wärmeleiter ausgelöst, wobei aus Toleranzgründen oftmals ein langer Schaltweg erzeugt werden muss bzw. eine 90°-Umlenkung erforderlich ist, um die leiterplattenparallelen SMD-Taster zu schalten.

Für den entgegengesetzten Fall des Schaltvorganges, d. h. des Lösens des Tasters bei einem Öffnen des Gehäuses ist oftmals zusätzlich eine Metallfeder erforderlich, um nötige Rückstellkräfte des Systems sicherzustellen, da elastische Verformungen von Kunststoffteilen über Zeiträume größer 12 Jahre und thermische Belastungen zu berücksichtigen sind, wodurch sich ein derart komplizierter Mechanismus verklemmen kann und dadurch nicht mehr sicher auslöst.

Aus der DE 10 2004 023 990 B3 ist ein elektronischer Heizkostenverteiler bekannt. Bei dem elektronischen Heizkostenverteiler mit einem Gehäuse und einer innerhalb des Gehäuses angeordneten Leiterplatte sind auf einer der Gehäuserückseite abgewandten Plattenseite der Leiterplatte zwei zueinander beabstandete Kontaktflächen angeordnet, die mittels eines an einem Freiende eine Kontaktscheibe aufweisenden, biegebeweglichen Auslöseelements elektrisch leitend miteinander verbunden sind, wenn das Gehäusevorderteil von der Rückseite abgehoben ist.

In der DE 199 38 812 A1 wird ein elektronischer Heizkostenverteiler beschrieben. Der elektronische Heizkostenverteiler umfasst einen ersten Temperatursensor zur Ermittlung der Oberflächentemperatur des Heizkörpers, einen zweiten Temperatursensor zur Ermittlung der Zimmertemperatur, eine Auswerteelektronik, die mit den Temperatursensoren verbunden ist und ein Gehäuse, das geschlossen und geöffnet werden kann. Die Temperatursensoren sind an gegenüberliegenden Enden einer die Auswerteelektronik tragenden Leiterplatte angeordnet. Das den ersten Temperatursensor tragende Ende der Leiterplatte wird mittels eines Federelementes gegen die Wärme leitende Rückseite des Gehäuses thermisch kontaktierend angedrückt. Dabei ist die Leiterplatte um eine Achse dreh- bzw. schwenkbar oder elastisch verformbar ausgebildet und vorzugsweise schräg im Gehäuse angeordnet.

Aus der DE 20 2008 009 277 U1 ist eine Vorrichtung zum elektronischen Erfassen der Wärmeabgabe eines Heizkörpers bekannt. Die Vorrichtung umfasst ein metallisches Rückteil, ein Gehäuse und eine Platine mit einem Heizkörper-Temperatursensor zum Messen der vom Heizkörper abgegebenen Wärmemenge, welcher mit einem Wärmeleiter in Verbindung steht. Die Vorrichtung weist eine Detektionseinrichtung zur Detektion des Entfernens der Platine und damit des Heizkörper-Temperatursensors von der Rückplatte auf.

In der US 4,150,371 wird ein Manipulationsindikator beschrieben. In einer Zählwerkeinheit eines Gas- oder Wasserzählers ist ein Manipulationserkennungsschalter angeordnet, welcher einen vorgespannten Kontaktarm zum Schließen eines Alarmschaltkreises aufweist. Der Kontaktarm wird bei auf dem Gas- oder Wasserzähler aufgesetzter Zählwerkeinheit durch einen Haltestab in seiner vorgespannten Position gehalten, in welcher der Alarmschaltkreis geöffnet ist, wobei der Haltestab am Gas- oder Wasserzähler anliegt und in dieser Position zudem eine Feder spannt. Wird die Zählwerkeinheit vom Gas- oder Wasserzähler entfernt, wird der Haltestab durch die Federkraft der Feder bewegt, wodurch der Kontaktarm sich aus der vorgespannten Position herausbewegt und den Alarmschaltkreis schließt.

Der Erfindung liegt die Aufgabe zugrunde, einen verbesserten Heizkostenverteiler anzugeben.

Die Aufgabe wird erfindungsgemäß gelöst durch einen Heizkostenverteiler mit den Merkmalen des Anspruchs 1.

Vorteilhafte Ausgestaltungen der Erfindung sind Gegenstand der Unteransprüche.

Ein Heizkostenverteiler umfasst ein Gehäuse, welches zwei miteinander verbindbare Gehäuseteile aufweist, wobei im Gehäuse eine bei einem Öffnen des Gehäuses aktivierbare Vorrichtung zur Manipulationserfassung angeordnet ist. In einem ersten Gehäuseteil ist eine Leiterplatte befestigt, wobei auf einer dem ersten Gehäuseteil zugewandten ersten Leiterplattenseite zumindest zwei voneinander beabstandete und mit einer Auswerteeinheit verbundene elektrische Kontakte angeordnet sind.

Erfindungsgemäß ist zwischen dem ersten Gehäuseteil und der ersten Leiterplattenseite zumindest ein Federelement derart angeordnet, dass ohne eine gegen eine Federkraft des Federelementes gerichtete mechanische Krafteinwirkung ein elektrisch leitfähiger Endbereich des Federelementes auf die elektrischen Kontakte gepresst ist. Weiterhin ist erfindungsgemäß bei geschlossenem Gehäuse zwischen einem zweiten Gehäuseteil und dem Federelement zumindest ein mit dem zweiten Gehäuseteil und dem Federelement mechanisch gekoppeltes und das Federelement gegen die Federkraft spannendes Halteelement angeordnet. Zudem weist die Leiterplatte erfindungsgemäß eine Durchführung von der ersten Leiterplattenseite zu einer zweiten Leiterplattenseite auf, durch welche das Halteelement durchführbar ist.

Durch dieses Spannen des Federelementes ist der elektrisch leitfähige Endbereich des Federelementes von den elektrischen Kontakten abgehoben, wodurch der elektrisch leitfähige Endbereich des Federelementes nicht mehr mit den elektrischen Kontakten elektrisch kontaktiert ist und diese daher nicht mehr über den elektrisch leitfähigen Endbereich des Federelementes kurzgeschlossen sind.
Bei einem Öffnen des Gehäuses ist die mechanische Krafteinwirkung des zweiten Gehäuseteils über das Halteelement auf das Federelement aufgehoben, wodurch der elektrisch leitfähige Endbereich des Federelementes durch die Federkraft des Federelementes wieder auf die elektrischen Kontakte aufgepresst und mit diesen elektrisch kontaktiert ist. Dadurch sind die elektrischen Kontakte wieder über den elektrisch leitfähigen Endbereich des Federelementes kurzgeschlossen. Dies ist von der mit den elektrischen Kontakten verbundenen Auswerteeinheit erfassbar, wodurch eine Manipulation des Gehäuses bzw. des Heizkostenverteilers feststellbar ist.

Dies ermöglicht auf einfache und kostengünstige Weise eine Realisierung einer Vorrichtung zur Manipulationserfassung, wodurch ein Öffnen des Gehäuses und/oder ein Entfernen des Heizkostenverteilers von einem Heizkörper erfassbar ist. Da der Heizkostenverteiler mit dem zweiten Gehäuseteil am Heizkörper befestigt ist und zum Entfernen des Heizkostenverteilers vom Heizkörper zunächst das Gehäuse zu öffnen ist, ist dieses Entfernen mittels der erfindungsgemäßen Lösung und deren Ausführungsformen erfassbar. Eine derart erfasste Manipulation ist bei einer Vernetzung des Heizkostenverteilers über eine Datenübertragung, beispielsweise über Funk, sofort beispielsweise von einem Betreiber des Heizkostenverteilers erfassbar.

Durch die erfindungsgemäße Lösung und deren Ausführungsformen ist ein Einsatz von teuren SMD-Tastern oder Schaltern, deren Anbringung auf der Leiterplatte und deren komplizierte mechanische Ansteuerung nicht mehr erforderlich. Zudem ist eine Zuverlässigkeit aufgrund einsetzbarer Federkräfte des Federelementes und aufgrund ermöglichter großer Federwege optimiert, da bei geschlossenem Gehäuse ein relativ großer Abstand zwischen dem elektrisch leitfähigen Endbereich des Federelementes und den elektrischen Kontakten ermöglicht ist. Dadurch ist eine sichere Trennung der elektrischen Kontaktierung zwischen den elektrischen Kontakten und dem elektrisch leitfähigen Endbereich des Federelementes bei geschlossenem Gehäuse sichergestellt.

Ebenso ist bei einem Öffnen des Gehäuses aufgrund der ermöglichten großen Federkräfte eine sichere elektrische Kontaktierung des elektrisch leitfähigen Endbereiches des Federelementes mit den elektrischen Kontakten und daraus resultierend ein Kurzschließen der elektrischen Kontakte über den elektrisch leitfähigen Endbereich des Federelementes sichergestellt, welches von der mit den elektrischen Kontakten verbundenen Auswerteeinheit erfassbar ist.

Um über eine gesamte Lebensdauer des Heizkostenverteilers eine gute elektrische Kontaktierung sicherzustellen, sind die elektrischen Kontakte und/oder der Endbereich des Federelementes vorzugsweise vergoldet.

Das Federelement ist zweckmäßigerweise eine Schraubenfeder, eine Blattfeder, eine Tellerfeder, eine Evolutfeder oder eine Ringfeder. Dadurch ist eine Manipulationserfassungsfunktion auf einfache und insbesondere kostengünstige Weise realisierbar und eine ausreichende und gleich bleibende Federkraft des Federelementes über die gesamte Lebensdauer des Heizkostenverteilers sicherstellbar.

Um diese ausreichende und gleich bleibende Federkraft des Federelementes und des Weiteren selbst bei nicht vergoldetem Endbereich eine gute elektrische Kontaktierung über die gesamte Lebensdauer des Heizkostenverteilers sicherzustellen, besteht das Federelement bevorzugt aus Edelstahl oder aus Bronze.

Um das Halteelement optimal zum Federelement und zum zweiten Gehäuseteil zu positionieren und eine Montage des Heizkostenverteilers zu erleichtern, d. h. um ein einfaches Zusammensetzen und Verschließen des Gehäuses ohne eine aufwändige Manipulation und Positionierung des Halteelementes zu ermöglichen, ist das Halteelement vorzugsweise über zumindest einen flexiblen Haltearm an dem der zweiten Leiterplattenseite zugewandten zweiten Gehäuseteil befestigt.

Zweckmäßigerweise sind das Halteelement und/oder der flexible Haltearm aus Kunststoff, so dass eine kostengünstige Herstellung und eine ausreichende Flexibilität des Haltearms ermöglicht sind. Insbesondere ist sichergestellt, dass eine Federkraft des flexiblen Haltearms deutlich geringer ist als die Federkraft des Federelementes und als die von dem zweiten Gehäuseteil auf das Halteelement und über dieses auf das Federelement einwirkende mechanische Krafteinwirkung, so dass Einflüsse des flexiblen Haltearms auf das Federelement zu vernachlässigen sind und eine ordnungsgemäße Funktion des Federelementes bzw. der Vorrichtung zur Manipulationserfassung nicht beeinträchtigen.

Die Durchführung in der Leiterplatte ist zweckmäßigerweise zwischen den voneinander beabstandeten elektrischen Kontakten angeordnet. Das Halteelement ist mittels des flexiblen Haltearms bei geöffnetem Gehäuse vorzugsweise derart positioniert, dass eine dem Federelement zugewandte erste Halteelementseite des Halteelementes in der Durchführung angeordnet ist. Zweckmäßigerweise ist bei geschlossenem Gehäuse das zweite Gehäuseteil gegen eine dem zweiten Gehäuseteil zugewandte zweite Halteelementseite des Halteelementes gepresst, wobei ein Abstand zwischen dem zweiten Gehäuseteil und der ersten Leiterplattenseite der Leiterplatte geringer ist als eine Länge des Halteelementes.

Dadurch erfolgt beim Schließen des Gehäuses eine mechanische Krafteinwirkung von dem zweiten Gehäuseteil auf das Halteelement, welches sich daraufhin durch die Durchführung hindurch in Richtung des Federelementes bewegt und das Federelement entgegen dessen Federkraft spannt. Auf diese Weise ist der elektrisch leitfähige Endbereich des Federelementes bei vollständig geschlossenem Gehäuse von den elektrischen Kontakten abgehoben, wodurch diese nicht mehr miteinander kontaktiert sind.

Bei einem Öffnen des Gehäuses ist die mechanische Kopplung des zweiten Gehäuseteils mit dem Halteelement aufgehoben, so dass das Halteelement das Federelement nicht mehr spannen kann. Durch die Federkraft des gespannten Federelementes ist das Halteelement durch die Durchführung in der Leiterplatte zurück schiebbar, bis der elektrisch leitfähige Endbereich des Federelementes wieder mit den elektrischen Kontakten kontaktiert ist. Dadurch sind die elektrischen Kontakte über den elektrisch leitfähigen Endbereich des Federelementes kurzgeschlossen, wodurch ein Stromkreis der mit den elektrischen Kontakten verbundenen Auswerteeinheit über den elektrisch leitfähigen Endbereich des Federelementes geschlossen ist. Auf diese Weise ist von der Auswerteeinheit das Öffnen des Gehäuses, d. h. eine Manipulation des Heizkostenverteilers, erfassbar.

Ausführungsbeispiele der Erfindung werden im Folgenden anhand von Zeichnungen näher erläutert.

Darin zeigen:
- Figur 1: einen Längsschnitt eines Heizkostenverteilers mit geöffnetem Gehäuse,
- Figur 2: einen Längsschnitt eines Heizkostenverteilers mit geschlossenem Gehäuse,
- Figur 3: eine Prinzipdarstellung des Heizkostenverteilers aus den Figuren 1 und 2, und
- Figur 4: eine Detailansicht von Figur 3.

Einander entsprechende Teile sind in allen Figuren mit den gleichen Bezugszeichen versehen.

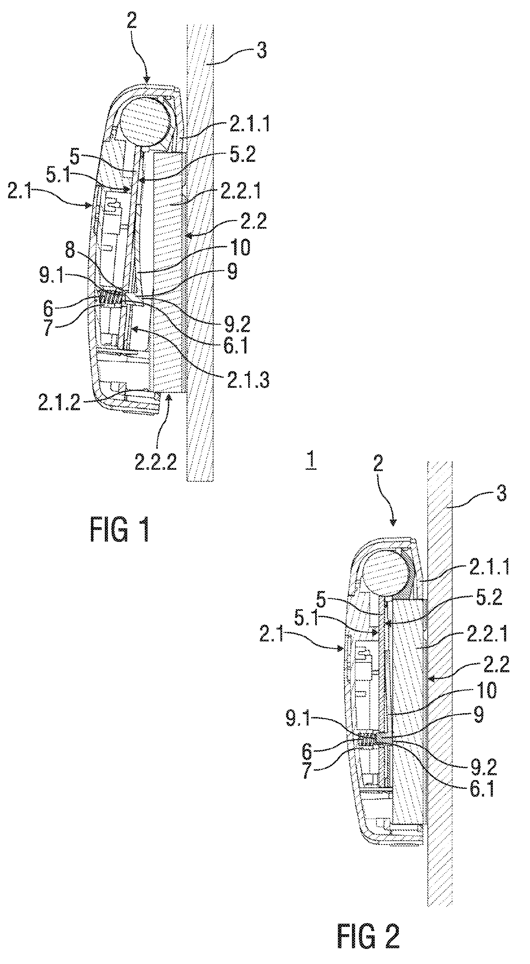

Die Figuren 1 und 2 zeigen einen Längsschnitt eines Heizkostenverteilers 1. Der Heizkostenverteiler 1 umfasst ein Gehäuse 2, welches aus einem ersten Gehäuseteil 2.1 und einem zweiten Gehäuseteil 2.2 gebildet ist. Im hier dargestellten Beispiel ist das erste Gehäuseteil 2.1 ein Gehäusevorderteil und das zweite Gehäuseteil 2.2 ein Gehäuserückteil. Das zweite Gehäuseteil 2.2 ist im hier dargestellten Beispiel bereits an einem Heizkörper 3 befestigt und umfasst zu einer optimierten Übertragung von Wärme des Heizkörpers 3 in den Heizkostenverteiler 1 ein Wärmeleitelement 2.2.1.

Das hier dargestellte Gehäuse 2 ist durch ein Einhängen des ersten Gehäuseteils 2.1 mit an diesem angeordneten oberen Haltehaken 2.1.1 in das zweite Gehäuseteil 2.2 und ein nachfolgendes Einrasten des ersten Gehäuseteils 2.1 mittels Rastnasen 2.1.2 in einen unteren Plombenbereich 2.2.2 des zweiten Gehäuseteils 2.2 verschließbar. In Figur 1 ist das Gehäuse 2 noch nicht vollständig geschlossen, da das erste Gehäuseteil 2.1 lediglich mit den oberen Haltehaken 2.1.1 in das zweite Gehäuseteil 2.2 eingehängt, aber noch nicht mit den Rastnasen 2.1.2 in den unteren Plombenbereich 2.2.2 des zweiten Gehäuseteils 2.2 eingerastet ist. In Figur 2 ist das Gehäuse 2 vollständig geschlossen.

Der Heizkostenverteiler 1 weist eine Vorrichtung zur Manipulationserfassung auf, mit welcher ein Öffnen des Gehäuses 2 und des Weiteren auch ein Entfernen des Heizkostenverteilers 1 vom Heizkörper 3 erfassbar ist, da der Heizkostenverteiler 1 mit dem zweiten Gehäuseteil 2.2 am Heizkörper 3 befestigt ist und zum Entfernen des Heizkostenverteilers 1 vom Heizkörper 3 zunächst das Gehäuse 2 zu öffnen ist.

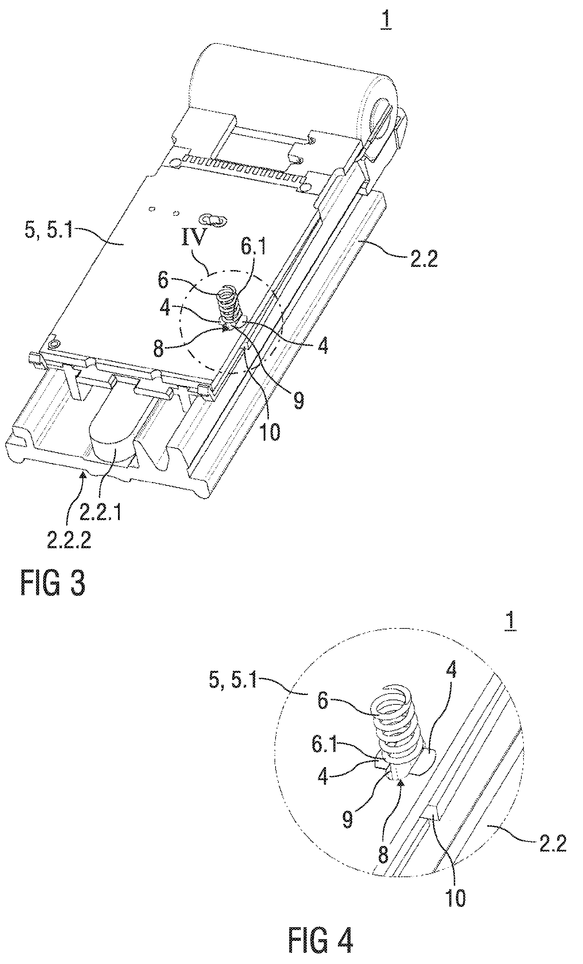

Die Vorrichtung zur Manipulationserfassung ist, wie in den Figuren 3 und 4 näher dargestellt, gebildet aus zwei voneinander beabstandeten elektrischen Kontakten 4 auf einer ersten Leiterplattenseite 5.1 einer im ersten Gehäuseteil 2.1 befestigten Leiterplatte 5, welche mit einer nicht näher dargestellten Auswerteeinheit verbunden sind. Dafür benötigte Leiterzüge sind bei einer Leiterplattenherstellung ohne nennenswerten zusätzlichen Aufwand bzw. zusätzliche Kosten erzeugbar.

Diese elektrischen Kontakte 4 sind bei geöffnetem Gehäuse 2 von einem elektrisch leitfähigen Endbereich 6.1 eines Federelementes 6 kontaktiert und über diesen kurzgeschlossen. Dies und daraus resultierend ein Öffnen des Gehäuses 2 ist mittels der Auswerteeinheit erfassbar. Eine derart erfasste Manipulation ist bei einer Vernetzung des Heizkostenverteilers 1 über eine Datenübertragung, beispielsweise über Funk, sofort beispielsweise von einem Betreiber des Heizkostenverteilers 1 erfassbar.

Das Federelement 6 ist im hier dargestellten Beispiel eine Schraubenfeder, beispielsweise aus Edelstahl oder Bronze, d. h. aus sogenannter Federbronze. Derartige Schraubenfedern sind Standardbauteile und daher sehr kostengünstig. Des Weiteren ist mittels eines derartigen Federelementes 6 eine ausreichende und gleich bleibende Federkraft des Federelementes 6 über eine gesamte Lebensdauer des Heizkostenverteilers 1 sichergestellt. Um auch eine gute elektrische Kontaktierung des elektrisch leitfähigen Endbereiches 6.1 des Federelementes 6 mit den elektrischen Kontakten 4 über die gesamte Lebensdauer des Heizkostenverteilers 1 sicherzustellen, können die elektrischen Kontakte 4 und/oder das Federelement 6 bzw. dessen Endbereich 6.1 vergoldet sein.

Das Federelement 6 ist, wie in den Figuren 1 und 2 dargestellt, in einer taschenförmig ausgebildeten Halterung 7 des ersten Gehäuseteils 2.1 zwischen dem ersten Gehäuseteil 2.1 und der dem ersten Gehäuseteil 2.1 zugewandten ersten Leiterplattenseite 5.1 angeordnet, wobei das Federelement 6 im Wesentlichen senkrecht zum ersten Gehäuseteil 2.1 und zur Leiterplatte 5 ausgerichtet ist.

Der elektrisch leitfähige Endbereich 6.1 des Federelementes 6 ist der Leiterplatte 5 zugewandt, wobei das Federelement 6 derart positioniert ist, dass die elektrischen Kontakte 4 auf der Leiterplatte 5 in Richtung eines Federwegs des Federelementes 6 liegen, d. h. bei einer Dehnung des Federelementes 6 aufgrund deren Federkraft, wenn dieser Federkraft keine ausreichende mechanische Krafteinwirkung entgegenwirkt, erfolgt ein Aufpressen des elektrisch leitfähigen Endbereiches 6.1 des Federelementes 6 auf die elektrischen Kontakte 4, so dass diese über den elektrisch leitfähigen Endbereich 6.1 des Federelementes 6 kurzgeschlossen sind.

Um dieses Aufpressen auf die elektrischen Kontakte 4 und dadurch eine gute elektrische Kontaktierung des elektrisch leitfähigen Endbereiches 6.1 des Federelementes 6 mit den elektrischen Kontakten 4 sicherzustellen, ist das Federelement 6 bereits vorgespannt zwischen dem ersten Gehäuseteil 2.1 und der Leiterplatte 5 in die taschenförmig ausgebildete Halterung 7 eingebaut, so dass der elektrisch leitfähige Endbereich 6.1 des Federelementes 6 ohne die entgegen der Federkraft gerichtete mechanische Krafteinwirkung mit einer ausreichend hohen Federkraft auf die elektrischen Kontakte 4 gepresst ist.

Um die mechanische Krafteinwirkung bei geschlossenem Gehäuse 2 zu realisieren, so dass der elektrisch leitfähige Endbereich 6.1 des Federelementes 6 von den elektrischen Kontakten 4 abgehoben und ausreichend beabstandet ist, weist die Leiterplatte 5 zwischen den elektrischen Kontakten 4 eine Durchführung 8 von der ersten Leiterplattenseite 5.1 zu einer dem zweiten Gehäuseteil 2.2 zugewandten zweiten Leiterplattenseite 5.2 auf. Durch diese Durchführung 8 ist ein Halteelement 9 durch die Leiterplatte 5 durchführbar und auf das Federelement 6 aufpressbar.

Um das Halteelement 9 optimal zum Federelement 6 und zum zweiten Gehäuseteil 2.2 zu positionieren und eine Montage des Heizkostenverteilers 1 zu erleichtern, d. h. um ein einfaches Zusammensetzen und Verschließen des Gehäuses 2 ohne eine aufwändige Manipulation und Positionierung des Halteelementes 9 zu ermöglichen, ist das Halteelement 9 über einen flexiblen Haltearm 10 an einer Zwischenwand 2.1.3 des ersten Gehäuseteils 2.1 befestigt, die sich zwischen dem zweiten Gehäuseteil 2.2 und der Leiterplatte 5 befindet, und bewirkt, dass bei geöffnetem Gehäuse 2, d. h. wenn keine mechanische Krafteinwirkung von dem zweiten Gehäuseteil 2.2 auf das Halteelement 9 erfolgt, eine dem Federelement 6 zugewandte erste Halteelementseite 9.1 des Halteelementes 9 in der Durchführung 8 angeordnet ist.

Bei geschlossenem Gehäuse 2 ist das zweite Gehäuseteil 2.2, wie in Figur 2 dargestellt, mit dem Wärmeleitelement 2.2.1 gegen eine dem zweiten Gehäuseteil 2.2 zugewandte zweite Halteelementseite 9.2 des Halteelementes 9 gepresst. Das Halteelement 9 ist derart ausgebildet, dass bei geschlossenem Gehäuse 2 ein Abstand zwischen dem zweiten Gehäuseteil 2.2, d. h. im hier dargestellten Beispiel dessen Wärmeleitelement 2.2.1, und der ersten Leiterplattenseite 5.1 der Leiterplatte 5 geringer ist als eine Länge des Halteelementes 9.

Dadurch ist das Halteelement 9 bei geschlossenem Gehäuse 2 mit dem zweiten Gehäuseteil 2.2 und dem Federelement 6 mechanisch gekoppelt. Daraus resultierend ist das Federelement 6 bei geschlossenem Gehäuse 2 über das Halteelement 9 mit dem zweiten Gehäuseteil 2.2 mechanisch gekoppelt, wodurch die beim Verschließen des Gehäuses 2 vom zweiten Gehäuseteil 2.2 verursachte mechanische Krafteinwirkung über das entsprechend lange Halteelement 9 auf das Federelement 6 einwirkt, welche der Federkraft des Federelementes 6 entgegenwirkt. D. h. beim Schließen des Gehäuses 2 erfolgt eine mechanische Krafteinwirkung von dem zweiten Gehäuseteil 2.2 auf das Halteelement 9, welches sich daraufhin durch die Durchführung 8 hindurch in Richtung des Federelementes 6 bewegt und das Federelement 6 entgegen dessen Federkraft spannt.

Bei vollständig geschlossenem Gehäuse 2 ist das Federelement 6 entgegen der Federkraft derart gespannt, dass der elektrisch leitfähige Endbereich 6.1 des Federelementes 6 von den elektrischen Kontakten 4 abgehoben ist, so dass der elektrisch leitfähige Endbereich 6.1 des Federelementes 6 nicht mehr mit den elektrischen Kontakten 4 elektrisch kontaktiert ist und diese nicht mehr über den elektrisch leitfähigen Endbereich 6.1 des Federelementes 6 kurzgeschlossen sind.

Der von den elektrischen Kontakten 4 abgehobene elektrisch leitfähige Endbereich 6.1 des Federelementes 6 bei geschlossenem Gehäuse 2 ist in den Figuren 3 und 4 näher dargestellt. Um dies verdeutlichen zu können, ist eine Gehäusefront des ersten Gehäuseteils 2.1 des geschlossenen Gehäuses 2 hier nicht dargestellt.

Das Halteelement 9 und der flexible Haltearm 10 sind vorzugsweise aus Kunststoff, so dass eine kostengünstige Herstellung und eine ausreichende Flexibilität des Haltearms 10 ermöglicht sind. Auf diese Weise stellen diese bei einer Herstellung des Heizkostenverteilers 1 keinen zusätzlichen Kostenfaktor dar.

Insbesondere ist sichergestellt, dass eine Federkraft des flexiblen Haltearms 10 deutlich geringer ist als die Federkraft des Federelementes 6 und als die von dem zweiten Gehäuseteil 2.2 auf das Halteelement 9 und über dieses auf das Federelement 6 einwirkende mechanische Krafteinwirkung, so dass Einflüsse des flexiblen Haltearms 10 auf das Federelement 6 zu vernachlässigen sind und eine ordnungsgemäße Funktion des Federelementes 6 bzw. der Vorrichtung zur Manipulationserfassung nicht beeinträchtigen.

Bei einem Öffnen des Gehäuses 2 ist die mechanische Kopplung des zweiten Gehäuseteils 2.2 mit dem Halteelement 9 aufgehoben, so dass das Halteelement 9 das Federelement 6 nicht mehr spannen kann. Durch die Federkraft des gespannten Federelementes 6 ist das Halteelement 9 durch die Durchführung 8 in der Leiterplatte 5 zurück schiebbar, bis der elektrisch leitfähige Endbereich 6.1 des Federelementes 6 wieder mit den elektrischen Kontakten 4 kontaktiert ist.

Dadurch sind die elektrischen Kontakte 4 über den elektrisch leitfähigen Endbereich 6.1 des Federelementes 6 kurzgeschlossen, wodurch ein Stromkreis der mit den elektrischen Kontakten 4 verbundenen Auswerteeinheit über den elektrisch leitfähigen Endbereich 6.1 des Federelementes 6 geschlossen ist. Auf diese Weise ist von der Auswerteeinheit das Öffnen des Gehäuses 2, d. h. eine Manipulation des Heizkostenverteilers 1, erfassbar.

Dies ermöglicht eine sehr kostengünstig realisierbare und über die gesamte Lebensdauer sichere Vorrichtung zur Manipulationserfassung des Heizkostenverteilers 1. Insbesondere ist ein Einsatz von teuren SMD-Tastern oder Schaltern, deren Anbringung auf der Leiterplatte 5 und deren komplizierte mechanische Ansteuerung nicht mehr erforderlich. Zudem ist eine Zuverlässigkeit aufgrund einsetzbarer Federkräfte des Federelementes 6 und aufgrund ermöglichter großer Federwege optimiert, da bei geschlossenem Gehäuse 2 ein relativ großer Abstand zwischen dem elektrisch leitfähigen Endbereich 6.1 des Federelementes 6 und den elektrischen Kontakten 4 ermöglicht ist. Dadurch ist eine sichere Trennung der elektrischen Kontaktierung zwischen den elektrischen Kontakten 4 und dem elektrisch leitfähigen Endbereich 6.1 des Federelementes 6 bei geschlossenem Gehäuse 2 sichergestellt.

Ebenso ist bei einem Öffnen des Gehäuses 2 aufgrund der ermöglichten großen Federkräfte eine sichere elektrische Kontaktierung des elektrisch leitfähigen Endbereiches 6.1 des Federelementes 6 mit den elektrischen Kontakten 4 und daraus resultierend ein Kurzschließen der elektrischen Kontakte 4 über den elektrisch leitfähigen Endbereich 6.1 des Federelementes 6 sichergestellt, welches von der mit den elektrischen Kontakten 4 verbundenen Auswerteeinheit erfassbar ist.

### BEZUGSZEICHENLISTE

- 1: Heizkostenverteiler
- 2: Gehäuse
- 2.1: erstes Gehäuseteil
- 2.1.1: Haltehaken
- 2.1.2: Rastnase
- 2.1.3: Zwischenwand
- 2.2: zweites Gehäuseteil
- 2.2.1: Wärmeleitelement
- 2.2.2: Plombenbereich
- 3: Heizkörper
- 4: Kontakt
- 5: Leiterplatte
- 5.1: erste Leiterplattenseite
- 5.2: zweite Leiterplattenseite
- 6: Federelement
- 6.1: Endbereich
- 7: Halterung
- 8: Durchführung
- 9: Halteelement
- 9.1: erste Halteelementseite
- 9.2: zweite Halteelementseite
- 10: Haltearm

## Patentansprüche

1. Heizkostenverteiler (1) mit einem Gehäuse (2), welches zwei miteinander verbindbare Gehäuseteile (2.1, 2.2) aufweist, wobei im Gehäuse (2) eine bei einem Öffnen des Gehäuses (2) aktivierbare Vorrichtung zur Manipulationserfassung angeordnet ist, wobei in einem ersten Gehäuseteil (2.1) eine Leiterplatte (5) befestigt ist und wobei auf einer dem ersten Gehäuseteil (2.1) zugewandten ersten Leiterplattenseite (5.1) zumindest zwei voneinander beabstandete und mit einer Auswerteeinheit verbundene elektrische Kontakte (4) angeordnet sind,
**dadurch gekennzeichnet, dass** zwischen dem ersten Gehäuseteil (2.1) und der ersten Leiterplattenseite (5.1) zumindest ein Federelement (6) derart angeordnet ist, dass ohne eine gegen eine Federkraft des Federelementes (6) gerichtete mechanische Krafteinwirkung ein elektrisch leitfähiger Endbereich (6.1) des Federelementes (6) auf die elektrischen Kontakte (4) gepresst ist, und dass bei geschlossenem Gehäuse (2) zwischen einem zweiten Gehäuseteil (2.2) und dem Federelement (6) zumindest ein mit dem zweiten Gehäuseteil (2.2) und dem Federelement (6) mechanisch gekoppeltes und das Federelement (6) gegen die Federkraft spannendes Halteelement (9) angeordnet ist und dass die Leiterplatte (5) eine Durchführung (8) aufweist, durch welche das Halteelement (9) durchführbar ist.

2. Heizkostenverteiler (1) nach Anspruch 1,
**dadurch gekennzeichnet, dass** die elektrischen Kontakte (4) und/oder der Endbereich (6.1) des Federelementes (6) vergoldet sind.

3. Heizkostenverteiler (1) nach Anspruch 1 oder 2,
**dadurch gekennzeichnet, dass** das Federelement (6) eine Schraubenfeder, eine Blattfeder, eine Tellerfeder, eine Evolutfeder oder eine Ringfeder ist.

4. Heizkostenverteiler (1) nach einem der Ansprüche 1 bis 3,
**dadurch gekennzeichnet, dass** das Federelement (6) aus Edelstahl oder aus Bronze besteht.

5. Heizkostenverteiler (1) nach einem der vorhergehenden Ansprüche,
**dadurch gekennzeichnet, dass** das Halteelement (9) über zumindest einen flexiblen Haltearm (10) an einer Zwischenwand (2.1.3) des ersten Gehäuseteils (2.1) angeordnet ist.

6. Heizkostenverteiler (1) nach Anspruch 5,
**dadurch gekennzeichnet, dass** das Halteelement (9) und/oder der flexible Haltearm (10) aus Kunststoff bestehen.

7. Heizkostenverteiler (1) nach einem der vorhergehenden Ansprüche,
**dadurch gekennzeichnet, dass** die Durchführung (8) in der Leiterplatte (5) zwischen den voneinander beabstandeten elektrischen Kontakten (4) angeordnet ist.

8. Heizkostenverteiler (1) nach einem der vorhergehenden Ansprüche,
**dadurch gekennzeichnet, dass** eine dem Federelement (6) zugewandte erste Halteelementseite (9.1) des Halteelementes (9) bei geöffnetem Gehäuse (2) in der Durchführung (8) angeordnet ist.

9. Heizkostenverteiler (1) nach einem der vorhergehenden Ansprüche,
**dadurch gekennzeichnet, dass** bei geschlossenem Gehäuse (2) das zweite Gehäuseteil (2.2) gegen eine dem zweiten Gehäuseteil (2.2) zugewandte zweite Halteelementseite (9.2) des Halteelementes (9) gepresst ist, wobei ein Abstand zwischen dem zweiten Gehäuseteil (2.2) und der ersten Leiterplattenseite (5.1) der Leiterplatte (5) geringer ist als eine Länge des Halteelementes (9).

## Claims

1. Heat cost allocator (1) having a housing (2) which has two housing parts (2.1, 2.2) which can be connected to one another, wherein an apparatus for manipulation detection, which apparatus is activatable when the housing (2) is opened, is arranged in the housing (2), wherein a printed circuit board (5) is fastened in a first housing part (2.1), and wherein at least two electrical contacts (4) which are at a distance from one another and are connected to an evaluation unit are arranged on a first printed circuit board side (5.1) which faces the first housing part (2.1),
**characterized in that** at least one spring element (6) is arranged between the first housing part (2.1) and the first printed circuit board side (5.1) in such a way that an electrically conductive end region (6.1) of the spring element (6) is pressed onto the electrical contacts (4) without a mechanical force effect which is directed against a spring force of the spring element (6), and **in that** at least one holding element (9) which is mechanically coupled to a second housing part (2.2) and to the spring element (6) and tensions the spring element (6) against the spring force is arranged between the second housing part (2.2) and the spring element (6) when the housing (2) is closed, and **in that** the printed circuit board (5) has a bushing (8) through which the holding element (9) is passable.

2. Heat cost allocator (1) according to Claim 1, **characterized in that** the electrical contacts (4) and/or the end region (6.1) of the spring element (6) are/ is gold-plated.

3. Heat cost allocator (1) according to Claim 1 or 2, **characterized in that** the spring element (6) is a helical spring, a leaf spring, a plate spring, a volute spring or an annular spring.

4. Heat cost allocator (1) according to one of Claims 1 to 3,
**characterized in that** the spring element (6) is composed of stainless steel or of bronze.

5. Heat cost allocator (1) according to one of the preceding claims,
**characterized in that** the holding element (9) is arranged on an intermediate wall (2.1.3) of the first housing part (2.1) by means of at least one flexible holding arm (10).

6. Heat cost allocator (1) according to Claim 5, **characterized in that** the holding element (9) and/ or the flexible holding arm (10) are/is composed of plastic.

7. Heat cost allocator (1) according to one of the preceding claims,
**characterized in that** the bushing (8) in the printed circuit board (5) is arranged between the electrical contacts (4) which are at a distance from one another.

8. Heat cost allocator (1) according to one of the preceding claims,
**characterized in that** a first holding element side (9.1) of the holding element (9), which first holding element side faces the spring element (6), is arranged in the bushing (8) when the housing (2) is open.

9. Heat cost allocator (1) according to one of the preceding claims, **characterized in that**, when the housing (2) is closed, the second housing part (2.2) is pressed against a second holding element side (9.2) of the holding element (9), which second holding element side faces the second housing part (2.2) wherein a distance between the second housing part (2.2) and the first printed circuit board side (5.1) of the printed circuit board (5) is smaller than a length of the holding element (9).

## Revendications

1. Répartiteur (1) de dépenses de chauffage doté d'un boîtier (2) qui présente
deux parties de boîtier (2.1, 2.2) aptes à être reliées l'une à l'autre,
un ensemble apte à être activé lors de l'ouverture du boîtier (2) et permettant de détecter des manipulations étant disposé dans le boîtier (2),
une carte de circuit (5) étant fixée dans une première partie (2.1) du boîtier et au moins deux contacts électriques (4) situés à distance l'un de l'autre et raccordés à une unité d'évaluation étant disposés sur un premier côté (5.1) de la carte de circuit, tourné vers la première partie (2.1) du boîtier, **caractérisé en ce que**
au moins un élément élastique (6) est disposé entre la première partie (2.1) du boîtier et le premier côté (5.1) de la carte de circuit de telle sorte qu'une partie d'extrémité électriquement conductrice (6.1) de l'élément élastique (6) est repoussée contre les contacts électriques (4) sans qu'il faille exercer une force mécanique opposée à la force élastique de l'élément élastique (6),
**en ce que** lorsque le boîtier (2) est fermé, au moins un élément de maintien (9) raccordé mécaniquement à la deuxième partie (2.2) du boîtier et à l'élément élastique (6) et repoussant l'élément élastique (6) en opposition à la force élastique est disposé entre une deuxième partie (2.2) du boîtier et l'élément élastique (6) et
**en ce que** la carte de circuit (5) présente un passage (8) par lequel l'élément de maintien (9) peut être passé.

2. Répartiteur (1) de dépenses de chauffage selon la revendication 1, **caractérisé en ce que** les contacts électriques (4) et/ou la partie d'extrémité (6.1) de l'élément élastique (6) sont dorés.

3. Répartiteur (1) de dépenses de chauffage selon les revendications 1 ou 2, **caractérisé en ce que** l'élément élastique (6) est un ressort hélicoïdal, un ressort en lame, un ressort en plateau, un ressort évolutif ou un ressort annulaire.

4. Répartiteur (1) de dépenses de chauffage selon l'une des revendications 1 à 3, **caractérisé en ce que** l'élément élastique (6) est réalisé en acier allié ou en bronze.

5. Répartiteur (1) de dépenses de chauffage selon l'une des revendications précédentes, **caractérisé en ce que** l'élément de maintien (9) est disposé par le biais d'au moins un bras flexible de maintien (10) sur une paroi intermédiaire (2.1.3) de la première partie (2.1) du boîtier.

6. Répartiteur (1) de dépenses de chauffage selon la revendication 5, **caractérisé en ce que** l'élément de maintien (9) et/ou le bras flexible de maintien (10) sont réalisés en matière synthétique.

7. Répartiteur (1) de dépenses de chauffage selon l'une des revendications précédentes, **caractérisé en ce que** le passage (8) est disposé dans la carte de circuit (5) entre les contacts électriques (4) situés à distance l'un de l'autre.

8. Répartiteur (1) de dépenses de chauffage selon l'une des revendications précédentes, **caractérisé en ce qu'**un premier côté (9.1) de l'élément de maintien (9) tourné vers l'élément élastique (6) est disposé dans le passage (8) lorsque le boîtier (2) est ouvert.

9. Répartiteur (1) de dépenses de chauffage selon l'une des revendications précédentes, **caractérisé en ce que** lorsque le boîtier (2) est fermé, la deuxième partie (2.2) du boîtier est repoussée contre un deuxième côté (9.2) de l'élément de maintien (9) tourné vers la deuxième partie (2.2) du boîtier, la distance entre la deuxième partie (2.2) du boîtier et le premier côté (5.1) de la carte de circuit (5) étant inférieure à la longueur de l'élément de maintien ( 9) .
